Europäisches Patentamt

(19) European Patent Office

Office européen des brevets

(11) Publication number: **0 214 704**
**B1**

(12) **EUROPEAN PATENT SPECIFICATION**

(45) Date of publication of the patent specification:
**12.12.90**

(21) Application number: **86201570.8**

(22) Date of filing: **11.09.86**

(51) Int. Cl.⁵: **A01J 25/06**

(54) Processing apparatus, particularly a stirring and distributing apparatus for a machine for draining and metering curds in the preparation of cheese, and a curd metering machine provided with an apparatus of this kind.

(30) Priority: **12.09.85 NL 8502503**

(43) Date of publication of application:
**18.03.87 Bulletin 87/12**

(45) Publication of the grant of the patent:
**12.12.90 Bulletin 90/50**

(84) Designated Contracting States:
**AT BE CH DE FR GB IT LI LU NL SE**

(56) References cited:
**DE-A- 2 850 486**
**NL-A- 7 113 478**
**NL-C- 25 985**
**NL-C- 132 054**
**US-A- 3 630 495**

**VOEDINGSMIDDELEN TECHNOLOGIE, vol. 1,
no. 39, 7 october 1970 , pages 631-633; "Revolutionaire
methode voor het bereiden van kaas"**

(73) Proprietor: **STORK FRIESLAND B.V., Stationsweg 84,
NL-8401 DT Gorredijk(NL)**

(72) Inventor: **Weel, Cornelis, De Hoge Bomen 12,
NL-9203 ND Drachten(NL)**

(74) Representative: **van der Veken, Johannes Adriaan et al,
EXTERPATENT B.V. P.O. Box 90649, NL-2509 LP
's-Gravenhage(NL)**

## Description

The invention relates to an apparatus for draining and metering curds in cheese preparation according to the preamble of claim 1.

An apparatus of this type is generally known in the art of cheese preparation, see for example Voedingsniddelen Technologie vol 1 no 39, 7 october 1970, pages 631–633. In order to obtain a high, uniform quality of the cheese produced, it is desirable for the curds contained in the reservoir to be kept friable. In addition, it is necessary for the curds to be distributed uniformly over the bottom of the reservoir and the pipes, and a determined level of curds should be maintained.

The object of the invention is to provide an apparatus with which these requirements can be met simultaneously in a relatively simple manner.

This object is attained by an apparatus for draining and metering curds in cheese preparation, comprising a reservoir for a mixture of curds and whey and a drainage system comprising a plurality of parallel perforated pipes leading from the bottom of the reservoir, which is characterized by a planetary motion stirring and distributing device disposed in the reservoir for stirring the mixture of curds and whey lying on the bottom of the reservoir and distributing it over the pipes, comprising a stirrer mounted on a shaft which is rotatable about its own centre line and which in addition is rotatable about a central axis of rotation extending at a distance from and parallel to said shaft, drive means for simultaneously rotating the stirrer both about its own centre line and about the central axis of rotation and a mechanism for transmitting the torque on the stirrer as it rotates through the mixture of curds and whey to a suitable torque measuring means, thereby providing means to measure the viscosity and/or level of the mixture, the torque measurement means being used, via a suitable control mechanism, to control the feeding of curds to the reservoir, and thereby to control the level of curds in the reservoir.

The stirring mechanism keeps the curds friable and distributes the curds uniformly over the bottom of the reservoir and the perforated pipes.

In view of the fact that during operation the torque on the stirrer is a measure for parameters such as viscosity, consistency and/or level of the mixture of curds and whey through which the stirrer moves, said parameters can be continuously measured, thereby enabling to maintain a determined level of curds in the reservoir.

DE-A 2 850 486 discloses a liquid stirring device comprising a stirrer mounted on a shaft which is rotatable about its own centre line and comprising a mechanism for transmitting the torque on the stirrer as it rotates through the liquid to a torque measurement means.

NL-C 25 985 discloses a planetary motion stirring mechanism comprising a stirrer mounted on a shaft which is rotatable about its own centre line and which in addition is rotatable about a central axis of rotation extending at a distance from and parallel to said shaft and drive means for simultaneously rotating the stirrer about its own centre line and about the central axis of rotation.

Preferred embodiments of the apparatus according to the invention are claimed in the dependent claims.

The invention will now be explained with the aid of an example of embodiment and with reference to the drawings, in which:

Figure 1 is a schematic section of a stirring device used in an apparatus according to the invention,

Figure 2 is a schematic representation of the different transmission means in the stirring device,

Figure 3 is a schematic longitudinal section of the top part of a draining column of an apparatus for metering curds according to the invention, and

Figure 4 is a cross-section of a draining column on the line IV–IV in Figure 3.

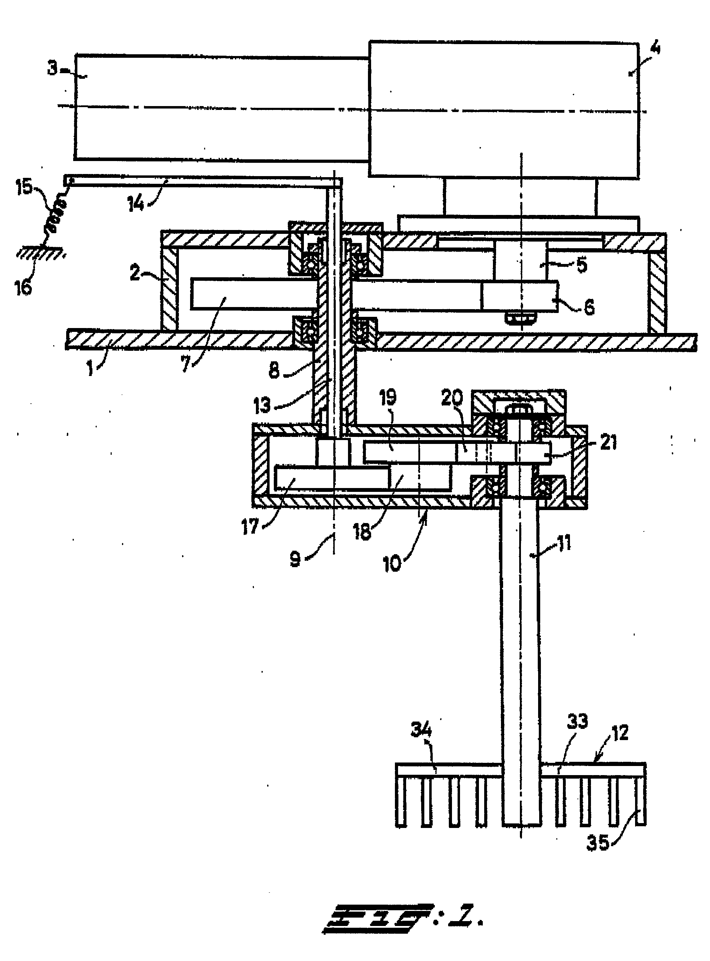

The stirring device shown in Figure 1 comprises a mounting plate 1, on which a casing 2 is fastened. For the purpose of driving the device a drive motor 3 and a reduction gearbox 4 are mounted on the casing 2. On the output shaft 5 of the reduction gearbox 4 is fastened a pinion 6 meshing with a gear 7 mounted on a hollow drive shaft 8 mounted for rotation in the casing 2. The centre line of the hollow shaft 8 is the central axis of rotation 9 of the device. At that end of the hollow shaft 8 which projects out of the underside of the casing 2 a rotatable arm 10 is fastened. Near the free end of this rotatable arm 10 the shaft 11 of a stirrer 12 is mounted rotatably in the arm 10. The shaft 11 extends parallel to the central axis of rotation 9.

The hollow shaft 8 contains a shaft 13 serving as measuring shaft. That end of the measuring shaft 13 which projects from the bottom face of the hollow shaft is coupled via gearing to the shaft 11 of the stirrer 12. At that end of the measuring shaft 13 which projects at the top from the hollow shaft is fastened a measuring arm 14. The free end of the measuring arm 14 is connected by a resilient element 15 to a fixed point 16.

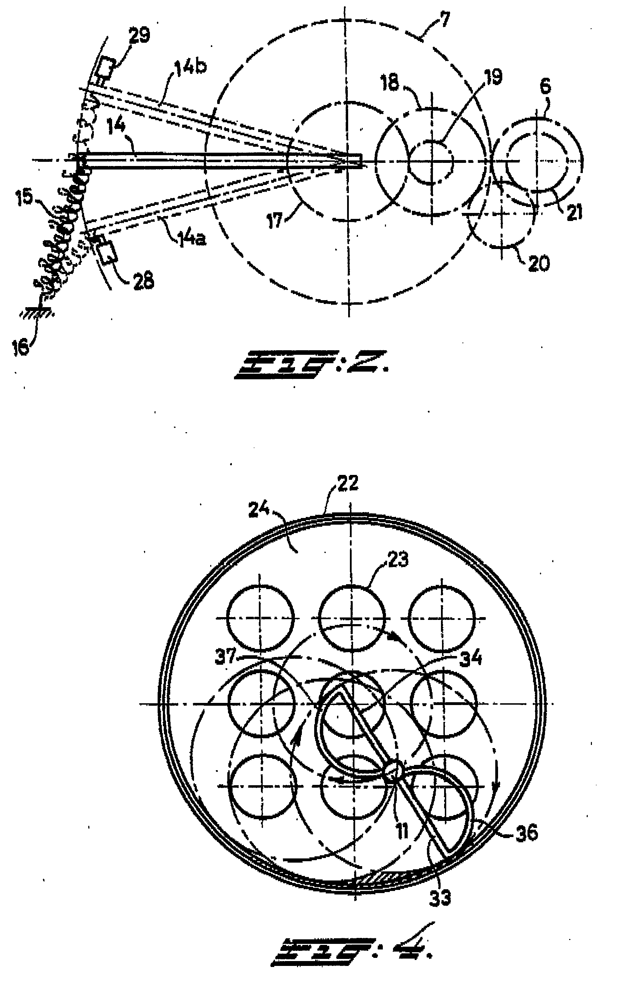

The different transmission means of the device are shown schematically in Figure 2, namely the transmission system between the shaft 5 of the reduction gearbox 4 and the shaft 8 of the rotatable arm 10, comprising the gears 6 and 7, and in addition the transmission system between the measuring shaft 13 and the shaft 11, comprising the gears 17, 18, 19, 20 and 21. The gears 18 and 19 are disposed on a common shaft. In Figure 2 the measuring arm 14 fastened on the measuring shaft 13 is also shown in different positions.

If the shaft 8 together with the arm 10 is now turned about the central axis 9, being driven by the motor 3 via the reduction gearbox 4 and the gear transmission 6, 7, the stirrer 12 will also turn about the central axis 9. Since the shaft 11 of the stirrer 12 is coupled by the gears 17–21 to the shaft 13, and since the rotation of said shaft 13 is prevented because the arm 14 is resiliently retained, the shaft 11 of the stirrer will turn. The ratio between the speed of rotation of the shaft 11 and that of the shaft 8 together with the arm 10 is then dependent on the transmission means between the shaft 13 and the shaft 11.

During operation a certain torque will be exterted on the measuring shaft 13, this torque being proportional to the resistance encountered by the stirrer 12 in the material being processed, or in other words the torque applied by the material to the stirrer 12 and therefore to the shaft 11. This torque is transmitted to the shaft 13 via the gear transmission system. On the other hand, and oppositely acting torque is applied to the shaft 13 by the spring 15 fastened to the measuring arm 14. In the state of equilibrium, in which the shaft 13 is completely stationary, the two torques applied to the shaft 13 are equal to one another. In the state of equilibrium the position of the measuring arm 14 is a measure of the resistance encountered by the stirrer. When this resistance is considerable, the spring 15 will in the state of equilibrium have to apply a greater force to the arm 14; therefore, when the spring 15 is a tension spring, it will be stretched further. When on the other hand the resistance encountered by the processing device 12 is slight, the spring 15 will be stretched only to a slight extent.

With the device described above the resistance encountered by the stirrer, and consequently the viscosity, consistency and/or level of the material being processed, can thus be measured in a simple manner. The construction of the device is at the same time simple and requires few additional components.

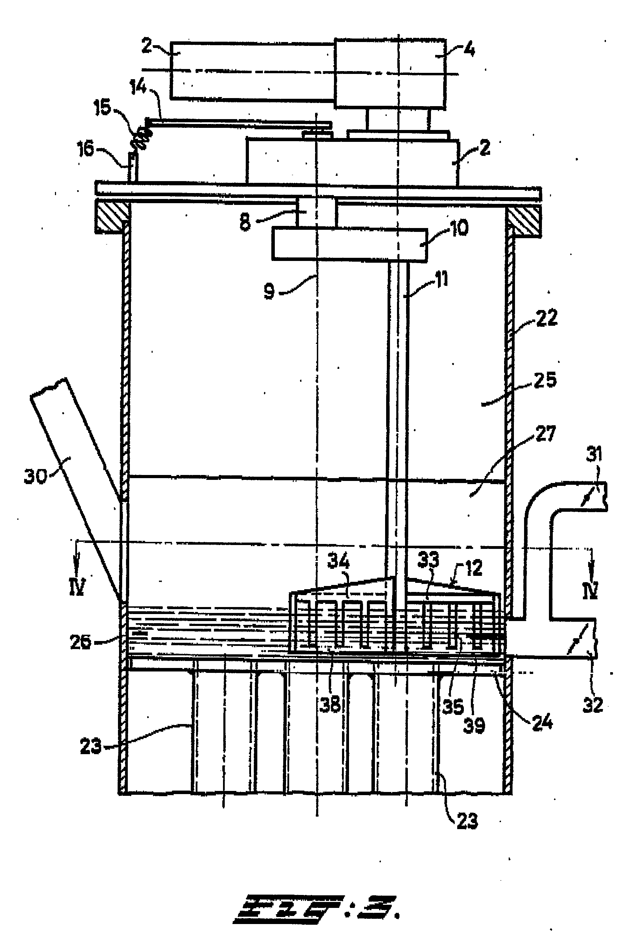

Figure 3 shows the top part of a draining column in an apparatus for metering curds in the preparation of cheese. The draining column consists of a leakproof outer wall 22 and a number of perforated inner pipes 23 which are disposed therein and which are spaced apart from one another and extend substantially parallel to each other. The inner pipes are mounted in end plates 24, of which only the top plate is shown in Figure 3, and together form the inner column of the draining column. The outer wall 22 is made longer at the top of the draining column than the inner pipes 23, so that in the top part of the outer wall 22 a space 25 is formed which serves as reservoir for the curds. The top end plate 24 of the inner column thus serves as the floor of the reservoir 25. Above the outer wall is mounted a device as described above. The stirrer 12 of this device extends to the floor 24 of the reservoir 25. When the metering machine is in operation, the reservoir is partly filled with curds and whey. In Figure 3, 26 indicates a layer consisting of a mixture of curds and whey, the whey being designated 27.

The curds sink into the perforated inner pipes, where they are separated from the whey. In order to obtain a uniform quality of the cheese produced, it is necessary for the curds in the reservoir 25 to be thoroughly stirred and kept friable and to be distributed uniformly over the floor of the reservoir. In addition, a determined level of curds must be maintained. This is achieved by disposing the above-described stirring device in the reservoir, the stirrer 12 being also a distributor for the curds and acting over the entire surface of the floor of the reservoir 25. In addition, with the aid of this device the level of the curds in the reservoir is measured in the manner described above.

In order to enable the curd metering apparatus to work automatically, one or more switches are provided at the level of the measuring arm 14 to switch on and off the supply of curds to the reservoir. When the level of curds in the reservoir 25 has become low, and therefore the resistance encountered by the stirrer and distributor has become slight, the measuring arm will assume the position 14a, in which the spring 15 needs to exert little force and thus is not greatly stretched (Figure 2). In this position, for example, a switch 28 is operated to switch on the supply of curds to the reservoir, so that the level of the curds in the reservoir will rise again. The resistance encountered by the stirrer and distributor 12 will then increase and the measuring arm 14 will move in the direction which stretches the spring 15 to a greater extent. Curds are supplied to the reservoir until the measuring arm 14 bears against a switch 29, which switches off the supply to the reservoir. In this way the level of curds in the reservoir can be adjusted between a maximum and a minimum value.

It is obviously also possible to apply a different kind of control. Thus, for example, the measuring arm may be in contact at its end with a pressure sensor measuring the force applied by the measuring arm. The supply of curds to the reservoir can be controlled in accordance with this force.

In figure 3 a number of supply pipes leading to the reservoir are shown. The supply pipe 30 serves to supply dry curds to the reservoir. This supply can be controlled by the control system just described. In addition, a supply pipe 31 for whey and a supply pipe 32 for a mixture of curds and whey are shown, these two pipes each being closed by a valve. The mixture of curds and whey is supplied in batches by means of a metering pump (not shown). The whey is also supplied via the pipe 31 by means of a pump.

In order to ensure an optimum stirring action and optimum distribution of the curds in the reservoir 25, the stirrer 12 has a special shape. As shown in Figures 3 and 4, the stirrer consists of two arms 33 and 34 which are fastened diametrically opposite one another on the shaft 11 and extend in the radial direction, and which are provided with downwardly extending pins, which extend parallel to the shaft 11 of the stirrer 12 and are spaced apart from one another, and also of two distributor arms 36 and 37 which are fastened diametrically opposition one another on the shaft 11 and are provided with plate-shaped carrier means 38 and 39. The carrier means 38 and 39 are semicircular, viewed in the direction of the shaft 11, with the concave side pointing in the direction of rotation of the stirrer and distributor 12. The speed of rotation of the stirrer is approximately four to six times as great as that of the arm 10, so that optimum stirring and distribution of the curds are achieved. In addition, the transmission ratio of the transmission system between the shaft 11 of the stirrer and distributor and the shaft 13 is so selected that the entire floor surface of the reservoir 25 is swept over by the stirrer and distributor 12 and no areas exist – such as those indicated in Figure 4 (hatched areas) – where the curds are left behind.

It will be clear that constructions other than those described in the example of embodiment are also possible, for example where the torque measuring means, transmissions, and regulating means are concerned, without going beyond the scope of the accompanying claims. Thus for example, the transmission system between the shaft 11 and the shaft 13 may be a belt transmission. The torque applied to the shaft 13 may also be measured differently, for example by means of a torsion spring, the angular rotation of which is measured. The torque can also be measured with the aid of pressure sensors against which the arm 14 bears.

## Claims

1. Apparatus for draining and metering curds in cheese preparation, comprising a reservoir (25) for a mixture (26) of curds and whey and a drainage system comprising a plurality of parallel perforated pipes (23) leading from the bottom (24) of the reservoir, characterized by a planetary motion stirring and distributing device disposed in the reservoir (25) for stirring the mixture (26) of curds and whey lying on the bottom of the reservoir and distributing it over the pipes (23), comprising a stirrer (12) mounted on a shaft (11) which is rotatable about its own centre line and which in addition is rotatable about a central axis of rotation (9) extending at a distance from and parallel to said shaft (11), drive means for simultaneously rotating the stirrer (12) both about its own centre line and about the central axis of rotation (9) and a mechanism for transmitting the torque on the stirrer (12) as it rotates through the mixture (26) of curds and whey to a suitable torque measuring means, thereby providing means to measure the viscosity and/or level of the mixture, the torque measurement means being used, via a suitable control mechanism, to control the feeding of curds to the reservoir, and thereby to control the level of curds in the reservoir.

2. Apparatus according to Claim 1, characterized in that the torque measuring means comprise a measuring shaft (13) extending coaxially to the central axis of rotation (9) and coupled via a transmission means to the shaft (11) of the stirrer (12), and that retaining means (14, 15, 16) are provided for preventing or limiting the rotation of the measuring shaft (13).

3. Apparatus according to Claim 2, characterized in that the retaining means are adapted to measure the torque acting on the measuring shaft (13).

4. Apparatus according to Claim 2 or 3, characterized in that on the measuring shaft (13) a measuring arm (14) is fastened whose free end is connected via a resilient element (15) to a fixed point (16).

5. Apparatus according to one of the Claims 2 to 4, characterized in that the shaft (11) of the stirrer (12) is mounted for rotation in an arm (10) extending at right angles to said shaft (11) and mounted on a hollow drive shaft (8) extending coaxially to the central axis of rotation (9), the measuring shaft (13) being received in the hollow drive shaft (8) and the transmission means between the measuring shaft (13) and the shaft (11) of the stirrer (12) consisting of a gear transmission.

6. Apparatus according to Claim 4, characterized in that the control mechanism comprises one or more switches (28, 29), operated by the measuring arm (14) fastened on the measuring shaft (13), for switching on and off the feeding of curds to the reservoir (25).

7. Apparatus according to Claim 1, characterized in that the stirrer (12) is provided with one or more radially projecting stirring arms (33, 34) attached to its shaft (11) and equipped with downwardly extending pins (35), which extend parallel to the shaft (11) and are spaced apart form one another, and is further provided with one or more distributing arms (36, 37) which are attached to the shaft (11) and are provided with preferably plate-shaped carriers (38, 39) for the curds (26).

8. Apparatus according to Claim 1, characterized in that the ratio between the speed of rotation of the shaft (11) of the stirrer (12) about its own centre line and the speed of the rotation of the shaft (11) about the central axis of rotation (9) during operation is adjustable such that within a certain period of time the entire or almost the entire bottom area of the reservoir (25) is swept over by the stirrer (12).

9. Apparatus according to Claim 8, characterized in that said ratio is between four and six.

## Patentansprüche

1. Vorrichtung zum Entwässern und Dosieren von Käsebruch bei der Käseherstellung, mit einem Behälter (25) für ein Gemisch (26) aus Käsebruch und Molke und einem Entwässerungssystem, das eine Anzahl parallel angeordneter perforierter Rohre (23) aufweist die vom Boden (24) des Behälters wegführen, gekennzeichnet durch eine Rühr- und Verteilungsvorrichtung mit Planetenbewegung, die in dem Behälter (25) zum Rühren einer auf dem Boden des Behälters liegenden Mischung aus Käsebruch und Molke angeordnet ist und diese Mischung auf die Rohre (23) verteilt, welche Vorrichtung einen Rührer (12) umfaßt, der an einer drehbaren Welle (11) angebracht ist, die um ihre eigene Mittelachse und zusätzlich um eine zentrale Drehachse (9) rotiert, die sich in einem Abstand von und parallel zur Welle (11) erstreckt, ferner Antriebsmittel zur gleichzeitigen Drehung des Rührers (12) sowohl um seine eigene Mittelachse als auch um die zentrale Drehachse (9), und einen Mechanismus zur Übertragung des beim Rotieren durch das Gemisch (26) aus Käsebruch und Molke auf den Rührer (12) wirkenden Drehmoments zu einem geeigneten Drehmoment-Meßmittel, wodurch Mittel zum Messen der Viskosität und/oder des Niveaus der Mischung gebildet sind und wobei die Drehmoment-Meßmittel dazu verwendet werden, über einen geeigneten Steuermechanismus die Nachspeisung von Käsebruch in den Behälter und dadurch das Käsebruchniveau in dem Behälter zu steuern.

2. Vorrichtung nach Anspruch 1, dadurch gekennzeichnet, daß die Drehmoment-Meßmittel eine Meßwelle (13) umfassen, die sich koaxial zur zentralen Drehachse (9) erstreckt und über Übersetzungsmittel mit der Welle (11) des Rührers (12) gekuppelt ist, und daß Haltemittel (14, 15, 16) vorgesehen sind zur Verhinderung oder Begrenzung der Drehbewegung der Meßwelle (13).

3. Vorrichtung nach Anspruch 2, dadurch gekennzeichnet, daß die Haltemittel dazu geeignet sind, das auf die Meßwelle (13) wirkende Drehmoment zu messen.

4. Vorrichtung nach Anspruch 2 oder 3, dadurch gekennzeichnet, daß an der Meßwelle (13) ein Meßarm (14) befestigt ist, dessen freies Ende mittels eines Federelements (15) mit einem Festpunkt (16) verbunden ist.

5. Vorrichtung nach einem der Ansprüche 2 bis 4, dadurch gekennzeichnet, daß die Welle (11) des Rührers (12) in einem Arm (10) drehbar gelagert ist, der sich im rechten Winkel zur Welle (11) erstreckt und an einer hohlen Antriebswelle (8) angebracht ist, die koaxial zur zentralen Drehachse (9) angeordnet ist, wobei die Meßwelle (13) in der hohlen Antriebswelle (8) gelagert ist, und daß die Übersetzungsmittel zwischen der Meßwelle (13) und der Welle (11) des Rührers (12) aus einem Zahnradgetriebe bestehen.

6. Vorrichtung nach Anspruch 4, dadurch gekennzeichnet, daß der Steuermechanismus einen oder mehrere Schalter (28, 29) umfaßt, die von dem an der Meßwelle (13) befestigten Meßarm (14) betätigt werden, um die Nachspeisung von Käsebruch in den Behälter (25) ein- und auszuschalten.

7. Vorrichtung nach Anspruch 1, dadurch gekennzeichnet, daß der Rührer (12) mit einem oder mehreren an seiner Welle (11) befestigten, radial abstehenden Rührarmen (33, 34) versehen ist, die mit nach unten stehenden Zinken (35) ausgerüstet sind, welche sich parallel zur Welle (11) erstrecken und gegeneinander beabstandet sind und daß der Rührer ferner mit einem oder mehreren Verteilarmen (36, 37) versehen ist, die an der Welle (11) befestigt sind und vorzugsweise plattenförmige Mitnehmer (38, 39) für den Käsebruch (26) aufweisen.

8. Vorrichtung nach Anspruch 1, dadurch gekennzeichnet, daß das Übersetzungsverhältnis zwischen der Drehgeschwindigkeit der Welle (11) des Rührers (12) um seine eigene Mittelachse und der Drehgeschwindigkeit der Welle (11) um die zentrale Drehachse (9) während des Betriebes einstellbar ist, so daß innerhalb eines bestimmten Zeitintervalls die ganze oder fast die ganze Bodenfläche des Behälters (25) von dem Rührer (12) überstrichen wird.

9. Vorrichtung nach Anspruch 8, dadurch gekennzeichnet, daß das Übersetzungsverhältnis zwischen vier und sechs liegt.

**Revendications**

1. Appareil pour égoutter et mesurer les paramètres du caillé pendant la fabrication du fromage, comprenant un réservoir (25) pour un mélange (26) de caillé et de petit lait et un système d'égouttage comprenant une pluralité de conduits parallèles perforés (23) partant du fond (24) du réservoir, caractérisé par un dispositif d'agitation et de distribution à mouvement planétaire, disposé dans le réservoir (25) pour agiter le mélange (26) de caillé et de petit lait couvrant le fond du réservoir et le distribuer dans les conduits (23), comprenant un agitateur (12) monté sur un arbre (11) qui peut tourner autour de son propre axe central et, en outre, autour d'un axe central de rotation (9) s'étendant à une certaine distance de l'arbre (11), parallèlement à celui-ci, des moyens d'entraînement en rotation de l'agitateur (12), simultanément autour de son axe propre et autour de l'axe central de rotation (9), et un mécanisme de transmission du couple exercé sur l'agitateur (12) lorsqu'il traverse en tournant le mélange (26), vers un moyen approprié de mesure du couple, constituant ainsi un moyen pour mesurer la viscosité et/ou le niveau du mélange, les moyens de mesure du couple étant utilisés par l'intermédiaire d'un mécanisme de commande approprié, pour commander l'approvisionnement en caillé du réservoir et ainsi pour commander le niveau du caillé dans celui-ci.

2. Appareil selon la revendication 1, caractérisé en ce que les moyens de mesure du couple comprennent un arbre de mesure (13) qui s'étend coaxialement à l'axe central de rotation (9) et est couplé, à l'aide de moyens de transmission, à l'arbre (11) de l'agitateur (12), et en ce que des moyens de retenue (14, 15, 16) sont prévue pour bloquer ou limiter la rotation de l'arbre de mesure (13).

3. Appareil selon la revendication 2, caractérisé en ce que les moyens de retenue sont aptes à mesurer le couple agissant sur l'arbre de mesure (13).

4. Appareil selon la revendication 2 ou 3, caractérisé en ce qu'un bras de mesure (14) est fixé sur l'arbre de mesure (13), l'extrémité libre de ce bras étant connectée à un point fixe (16) au moyen d'un élément élastique (15).

5. Appareil selon l'une des revendications 2 à 4, caractérisé en ce que l'arbre (11) de l'agitateur (12) est monté rotatif dans un bras (10) disposé à angle droit par rapport audit arbre (11) et monté sur un arbre d'entraînement creux (8) disposé coaxialement à l'axe central de rotation (9), l'arbre de mesure (13) étant logé dans l'arbre d'entraînement creux (8) et les moyens de transmission entre l'arbre de mesure (13) et l'arbre (11) de l'agitateur (12) consistant en une transmission par engrenage.

6. Appareil selon la revendication 4, caractérisé en ce que le mécanisme de commande comprend un ou plusieurs interrupteurs (28, 29) actionnés par le bras de mesure (14) fixé sur l'arbre de mesure (13), afin de déclencher et d'arrêter l'alimentation en caillé du réservoir (25).

7. Appareil selon la revendication 1, caractérisé en ce que l'agitateur (12) présente un ou plusieurs bras agitateurs (33, 34) faisant saillie radialement, attachés à son arbre (11) et munis de tiges (35) dirigées vers le bas parallèlement à l'arbre (11) et disposées à certains intervalles, l'agitateur présentant également un ou plusieurs bras distributeurs (36, 37) fixés à l'arbre (11) et présentant des entraîneurs (38, 39) ayant de préférence la forme de plaques pour le caillé (26).

8. Appareil selon la revendication 1, caractérisé en ce que le rapport entre la vitesse de rotation de l'arbre (11) de l'agitateur (12) autour de son propre axe central et la vitesse de rotation de l'arbre (11) autour de l'axe central de rotation (9) en cours de fonctionnement est réglable de manière à ce que l'agitateur (12) balaye, au cours d'une certaine période de temps, la surface totale ou quasi-totale du fond du réservoir (25).

9. Appareil selon la revendication 8, caractérisé en ce que ledit rapport est compris entre quatre et six.

FIG:1.

FIG:2.

FIG:4.

FIG:3.